(19) Europäisches Patentamt
European Patent Office
Office européen des brevets

(11) **EP 4 140 728 A1**

(12) **EUROPEAN PATENT APPLICATION**

(43) Date of publication:
01.03.2023 Bulletin 2023/09

(21) Application number: 21193298.3

(22) Date of filing: **26.08.2021**

(51) International Patent Classification (IPC):
**B32B 5/18** (2006.01)    **B32B 7/12** (2006.01)
**B32B 27/08** (2006.01)    **B32B 27/18** (2006.01)
**B32B 27/20** (2006.01)    **B32B 27/36** (2006.01)
**H01Q 1/00** (2006.01)

(52) Cooperative Patent Classification (CPC):
**B32B 5/18; B32B 7/12; B32B 27/08; B32B 27/18; B32B 27/20; B32B 27/365; H01Q 1/424;** B32B 2250/03; B32B 2250/244; B32B 2250/246; B32B 2307/20; B32B 2307/212; B32B 2307/50; B32B 2457/00

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude K12**
**51365 Leverkusen (DE)**

(54) **A MULTILAYER COMPOSITE SHEET FOR ANTENNA HOUSING**

(57)    The present application relates to a multilayer composite sheet for antenna housing, a preparation method therefor, and use thereof. The multilayer composite sheet comprises at least two non-foamed skin layers (1, 2) and a foamed core layer (3) therebetween. The multilayer composite sheet according to the present invention can achieve improved signal transmission performance and reduced weight, and can be used as an outdoor and/or indoor antenna housing.

EP 4 140 728 A1

**Description**

**Technical Field**

The present invention belongs to the field of polymer composite. Specifically, the present invention relates to a multilayer composite sheet for antenna housing, a preparation method therefor, and an antenna housing made from the same.

**Background Art**

The 5G technology is the coming fifth generation wireless mobile communication technology. 5G wireless networks will support 1,000-fold gains in capacity, connections for at least 100 billion devices, and a 10 Gb/s individual user experience capable of extremely low latency and response times. 5G is the backbones for Artificial Intelligence (AI), Internet of Things (IOT), automation, connected cars, Remote healthcare, smart city, etc. The deployment of these networks will emerge between 2020 and 2030.

5G can cover a broad range of waves, including middle band lower than 6GHz, and millimeter wave higher than 24 GHz. Due to the high attenuation of higher frequency electromagnetic waves when they encounter obstacles during transmission, high signal transmission would be one of the key requirements for the antenna protective materials to be used for 5G technology.

Better signal transmission performance means that the dielectric constant Dk and the loss factor Df of the material are low and stable under a wide range of frequencies and environmental conditions. If the antenna housing has a multilayer structure, S11 (return loss) and S21 (gain) are commonly used indicators to characterize the transmission performance of the antenna, and its unit is dB. In the real applications, S11 should be less than -10 dB or even less than -20 dB.

Traditional antenna housings having a solid structure are made of plastic resins by injection molding or extrusion molding, wherein Dk and Df are dependent on the material itself, generally higher Dk and Df would lead to higher signal loss.

Because of longer wavelength being used in 4G, even if there is signal loss, the influence is quite limited, thus products having the solid structure made by standard injection molding or extrusion molding can basically fulfill actual application requirement.

However, for 5G with mmWave (millimeter wave, above 24GHz), higher signal transmission performance is required due to the challenge of signal attenuation. In actual application, basic properties of polycarbonate need to be maintained to certain degree and signal loss need to be reduced. Meanwhile, because of the integration of RRU (remote radio unit) with AAU (active antenna unit), the weight of the final antenna part has been increased, which also requires for weight reduction of the antenna housing.

There are some patent documents related to multilayer composite sheets comprising a foaming layer.

US6492015B1 discloses a composite sheet comprising a foamed polycarbonate resin first layer and a non-foamed polycarbonate resin-containing second layer. Two layers are laminated by coextrusion or by extruding the second layer onto the first layer. The foamed polycarbonate resin layer has a thickness of 0.5-15 mm, the non-foamed polycarbonate resin layer has a thickness of 0.05-0.1 mm.

CN111421937A discloses a sandwich composite sheet with a core layer and two skin layers for 5G millimeter wave antenna housing. The two skin layers are made from thermoplastic resins or fiber reinforced thermoplastic composite materials and the core layer is a thermoplastic foamed material. However, the signal transmittance of the sandwich composite are not high as desired.

Therefore, there is still a need in 5G millimeter wave related applications for antenna housings that have improved signal transmission performance and reduced weight.

**Summary of the Invention**

An object of the present invention is to provide an antenna housing for, preferably for 5G millimeter wave, which has improved signal transmission performance and and reduced weight.

According to a first aspect of the present invention, provided is a multilayer composite sheet for an antenna housing, comprising, in order:

    a first non-foamed skin layer 1;
    an optional first adhesive layer 4;
    a foamed core layer 3;
    an optional second adhesive layer 5; and

a second non-foamed skin layer 2;
wherein,

the first and second non-foamed skin layers 1, 2 are made from a first polycarbonate composition comprising polycarbonate and an optional component selected from impact modifiers, flame retardants, UV absorbers, and fillers,

the core layer 3 is made from a second polycarbonate composition comprising polycarbonate and an optional component selected from impact modifiers and flame retardants,

each of the first and second skin layers 1, 2 has a thickness in a range of 0.1-1.0 mm, the core layer 3 has a thickness in a range of 0.5-10 mm, the total thickness of the multi-layer polycarbonate composite sheet is in a range of 1.6-12.2 mm, the thickness ratio of the core layer 3 to the multilayer composite sheet is in a range of 0.2-0.97,

the density of the core layer 3 is in the range of 0.2-0.78 $g/cm^3$, the average density of the multilayer composite sheet is in the range of 0.5-1.1 $g/cm^3$,

the multilayer composite sheet has signal transmittance of more than 96% and S11 of less than -20 dB, according to electromagnetic simulation based on plane wave at mmWave frequencies.

According to a second aspect of the present invention, provided is a method for preparing the multilayer composite sheet according to the present invention by co-extrusion, thermoforming, or adhesive bonding.

According to a third aspect of the present invention, provided is an antenna housing comprising the multilayer composite sheet according to the present invention.

The inventors found that the multilayer composite sheet according to the present invention can achieve improved signal transmission performance.

Meanwhile, since the core layer is foamed, the multilayer composite sheet according to the present invention has a reduced weight, as compared with a solid sheet with the same size.

In some embodiments, the multilayer composite sheet according to the present invention can pass the falling dart impact test according to ISO 6603-1:1985 at room temperature ( 23 °C).

The multilayer composite sheet according to the present invention can be used as outdoor or indoor antenna housing, or portable electrical/electronic device housing, which requires good signal transmission performance and lightweight.

Brief Description of Drawings

The present invention is explained in more details below with reference to the accompanying drawings, wherein:

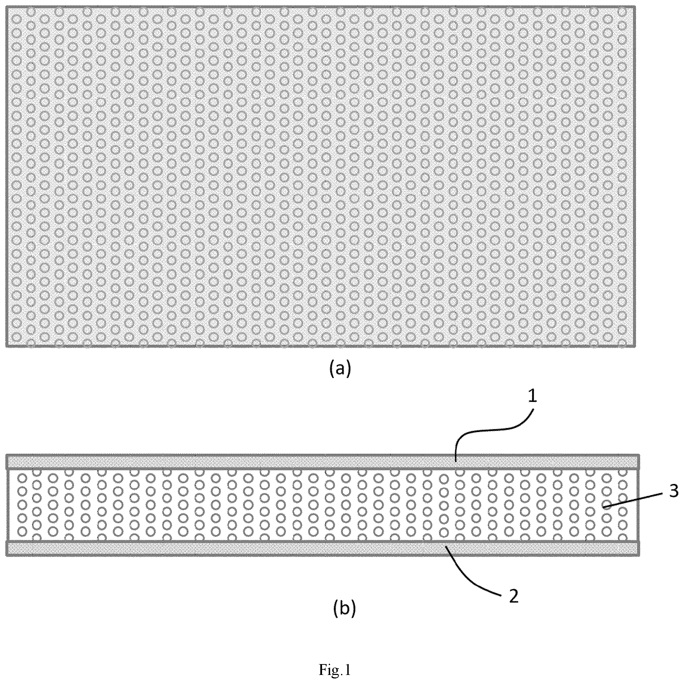

Fig. 1 schematically shows the front view (a) and the cross-section view (b) of a multilayer composite sheet according to an embodiment of the present invention, wherein 1 indicates a first non-foamed skin layer, 2 indicates a second non-foamed skin layer, 3 indicates an extrusion foamed core layer.

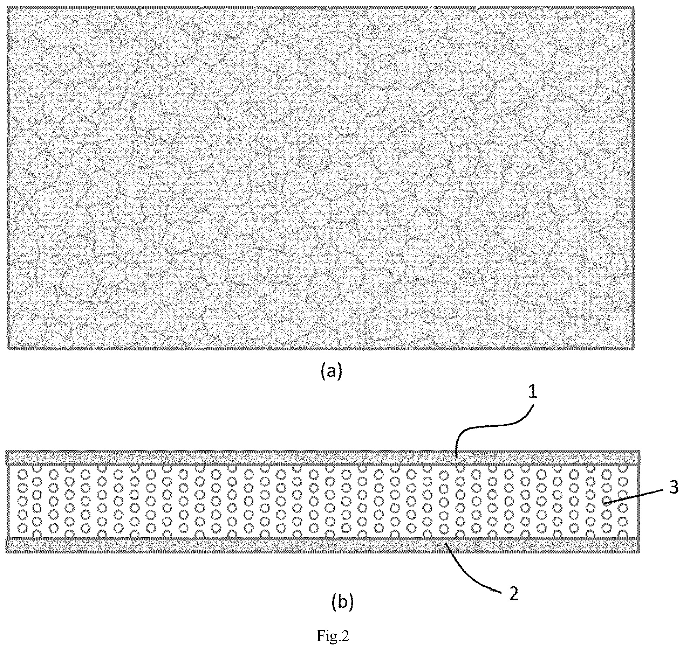

Fig. 2 schematically shows the front view (a) and the cross-section view (b) of a multilayer composite sheet according to an embodiment of the present invention, wherein 1 indicates a first non-foamed skin layer, 2 indicates a second non-foamed skin layer, 3 indicates a bead foamed core layer.

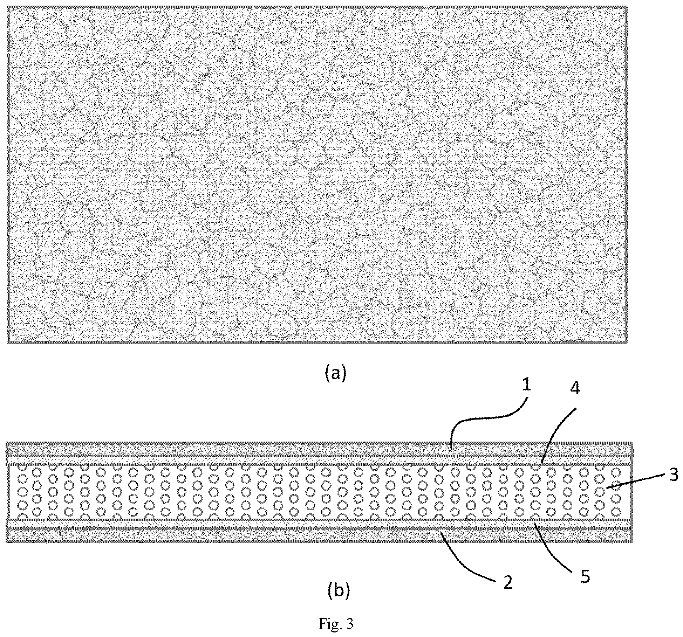

Fig. 3 schematically shows the front view (a) and the cross-section view (b) of a multilayer composite sheet according to an embodiment of the present invention, wherein 1 indicates a first non-foamed skin layer, 2 indicates a second non-foamed skin layer, 3 indicates a bead foamed core layer, 4 indicates a first adhesive layer, 5 indicates a second adhesive layer.

**Detailed description of the Invention**

Some specific embodiments of the invention will now be described with reference to the drawings for purposes of illustration and not limitation.

The descriptions of the various features in this application can be combined with each other when there is no contradiction, and all fall within the protection scope as claimed in the attached claims.

In that which follows and unless otherwise indicated, the limits of a range of values are included within this range, in particular in the expressions "between... and... " and "from ... to ...".

Unless defined otherwise, all technical and scientific terms used herein have the same meaning as commonly understood by one of ordinary skill in the art to which this invention belongs. When the definitions of the terms in this specification conflict with the meanings commonly understood by those skilled in the art to which the present invention pertains, the definitions described herein shall prevail.

Throughout the instant application, the term "comprising" is to be interpreted as encompassing all specifically mentioned features as well optional, additional, unspecified ones. As used herein, the use of the term "comprising" also discloses the embodiment wherein no features other than the specifically mentioned features are present (*i.e.* "consisting of').

Unless otherwise specified, all numerical values expressing thickness, density, and the like which are used in the description and claims are to be understood as being modified by the term "about".

In some embodiments, the multilayer composite sheet consists of, in order, a first non-foamed skin layer 1; a first adhesive layer 4; a foamed core layer 3 ; a second adhesive layer 5; and a second non-foamed skin layer 5.

In some embodiments, the multilayer composite sheet consists of, in order, a first non-foamed skin layer 1; a foamed core layer 3; and a second non-foamed skin layer 2.

## Non-foamed skin layers 1, 2

The multilayer composite sheet according to the present invention comprises a first non-foamed skin layer 1 and a second non-foamed skin layer 2.

The first and second non-foamed skin layers 1, 2 are independently from each other and made from a first polycarbonate composition comprising polycarbonate and an optional component selected from impact modifiers, flame retardants, UV absorbers, and fillers.

Any polycarbonate well known in the art can be used in the skin layers 1, 2.

The skilled in the art can select the types and amounts of impact modifiers, flame retardants, UV stabilizers, and fillers as needed.

For example, the impact modifier may be one or more selected from the following: butadiene rubber or styrene-butadiene rubber based and methyl methacrylate-styrene grafted impact modifiers having a core-shell structure (MBS), siloxane-acrylate rubbers having a core-shell structure, acrylate rubber-based core-shell impact modifiers, and the like.

Preferably, the butadiene rubber or styrene-butadiene rubber based core-shell impact modifiers are butadiene rubber or styrene-butadiene rubber based impact modifiers grafted with methyl methacrylate or methyl methacrylate-styrene copolymers, e.g. Kane Ace M732 available from Kaneka, and Paraloid™ EXL2650J, EXL2690 and EXL2691J available from Dow Chemicals, and the like.

Preferred siloxane-acrylate rubbers suitable to be used are, for example, Metablen S-2100, S-2001, S-2006 and the like available from Mitsubishi Rayon, and Kane Ace MR-01 from Kaneka Corporation.

It is preferred that the acrylate rubber-based core-shell impact modifiers are acrylate rubber-based impact modifiers grafted with methyl methacrylate, including Paraloid™ EXL2311, EXL2313, EXL2315, EXL2300, EXL2330 and EXL2390 available from Dow Chemicals; and Durastrength® 410, 440 and 480 available from Arkema.

The above-mentioned impact modifiers can be used alone or in combination.

Preferably, if present, the impact modifier is present in an amount ranging from 1.0 wt% to 8.0 wt% and more preferably from 1.0 wt% to 6.0 wt%, most preferably from 2.0 wt% to 5.0 wt%, based on the weight of the first polycarbonate composition.

The flame retardant may be a flame retardant commonly used in the field of polycarbonate materials, such as organic phosphorus-based flame retardants, such as bisphenol A bis (diphenyl phosphate) (BDP), triphenyl phosphate (TPP), phosphazene, and resorcinol bis (diphenyl phosphate) (RDP).

The above-mentioned flame retardants can be used alone or in combination.

Preferably, if present, the flame retardant is present in an amount ranging from 1.0 wt% to 5.0 wt%, and more preferably from 1.5 wt% to 3.0 wt%, based on the weight of the first polycarbonate composition.

The UV stabilizer may be an UV stabilizer commonly used in the field of polycarbonate materials.

Suitable UV stabilizers are described, for example, in EP 1 308 084 A1, DE 102007011069 A1, and DE 10311063 A1.

Particularly suitable UV stabilizers are hydroxybenzotriazoles such as 2-(3',5'-bis(1,1-dimethylbenzyl)-2'-hydroxyphenyl) benzotriazole (Tinuvin® 234, BASF SE, Ludwigshafen), 2-(2'-hydroxy-5'-(tert-octyl)phenyl)benzotriazole (Tinuvin® 329, BASF SE, Ludwigshafen), 2-(2'-hydroxy-3'-(2-butyl)-5'-(tert-butyl)phenyl)benzotriazole (Tinuvin® 350, BASF SE, Ludwigshafen), bis(3-(2H-benzotriazolyl)-2-hy-droxy-5-tert-octyl)methane (Tinuvin® 360, BASF SE, Ludwigshafen), 2- (4,6-diphenyl-1,3,5 -triazin-2 -yl)-5 - (hexyloxy)phenol (Tinuvin® 1577, BASF SE, Ludwigshafen), and also the benzophenones 2,4-dihydroxybenzophenone (Chimasorb® 22, BASF SE, Ludwigshafen) and 2-hydroxy-4-(octyloxy)benzophenone (Chimasorb® 81, BASF SE, Ludwigshafen), 2-propenoic acid, 2-cyano-3,3-biphenyl, 2,2-bis [[(2-cyano -1 -oxo-3,3 -diphenyl-2-propenyl)oxy] methyl]-1,3-propanediyl ester (9CI) (Uvinul® 3030, BASF SE, Ludwigshafen), 242-hydroxy-4-(2-ethylhexyl)oxy]phe-nyl-4,6-di(4-phenyl)phenyl-1,3,5-triazine (Tinuvin® 1600, BASF SE, Ludwigshafen) or tetraethyl 2,2'-(1,4-phe-nylenedimethylidene)bismalonate (Hostavin® B-Cap, Clariant AG). Mixtures of these UV stabilizers can also be used.

Preferably, if presents, the UV stabilizer is preferably present in an amount ranging from 0.10 wt% to 1.00 wt% and more preferably from 0.10 wt% to 0.50 wt%, particularly preferred from 0.10 wt% to 0.30 wt%, based on the weight of the first polycarbonate composition.

The filler may be that commonly used in the field of polycarbonate materials.

Examples of fillers are mica, talc, calcium carbonate, dolomite, wollastonite, barium Sulfate, silica, kaolin, feldspar, barytes, or the like.

The fillers may have an average particle size ($d_{50}$ value) of 0.1 to 20 micrometers, specifically 0.5 to 10 micrometers, and more specifically 1 to 3 micrometers. The average particle size (d50 value) of the fillers can be determined by means of ultracentrifuge measurement (W. Scholtan, H. Lange, Kolloid, Z. und Z. Polymere 250 (1972), 782-1796) .

Preferably, if present, the filler is present in an amount of 1-7 wt. %, preferably 2-6 wt. %, more preferably 2-5 wt. %, based on the total weight of the first polycarbonate composition.

The first skin layer 1 and the second skin layer 2, independently from each other, have a thickness in a range of 0.1-1.0 mm.

The skin layers 1, 2 can provide a protection to the multilayer composite sheet due to their UV resistance, anti-aging, and humidity resistance properties.

Foamed core layer 3

The multilayer composite sheet according to the present invention comprises a foamed core layer 3.

The foamed core layer 3 is made from a second polycarbonate composition comprising polycarbonate and an optional component selected from impact modifiers and flame retardants,

Any polycarbonate well known in the art can be used in the foamed core layer 3.

The impact modifiers and the flame retardants can be the same as defined previously.

Preferably, if present, the impact modifier is present in an mount ranging from 1.0 wt% to 8.0 wt% and more preferably from 1.0 wt% to 6.0 wt%, most preferably from 2.0 wt% to 5.0 wt%, based on the weight of the first polycarbonate composition.

Preferably, if present, the flame retardant is present in an amount ranging from 1.0 wt% to 5.0 wt%, and more preferably from 1.5 wt% to 3.0 wt%, based on the weight of the first polycarbonate composition.

The core layer 3 can be extrusion foamed or bead foamed.

Fig. 1 schematically shows the front view (a) and the cross-section view (b) of a multilayer composite sheet according to an embodiment of the present invention, wherein the multilayer composite sheet comprises a first non-foamed skin layer 1, a second non-foamed skin layer 2, and an extrusion foamed core layer 3 between the first non-foamed skin layer 1 and the second non-foamed skin layer 2.

Fig. 2 schematically shows the front view (a) and the cross-section view (b) of a multilayer composite sheet according to an embodiment of the present invention, wherein multilayer composite sheet comprises a first non-foamed skin layer 1, a second non-foamed skin layer 2, and a bead foamed core layer 3 between the first non-foamed skin layer 1 and the second non-foamed skin layer 2.

Fig. 3 schematically shows the front view (a) and the cross-section view (b) of a multilayer composite sheet according to an embodiment of the present invention, wherein multilayer composite sheet comprises, a first non-foamed skin layer 1, a first adhesive layer 4, a bead foamed core layer 3, a second adhesive layer 5, and a second non-foamed skin layer 2.

The core layer 3 has a thickness in a range of 0.5-10 mm.

The thickness ratio of the core layer 3 to the multilayer composite sheet is in a range of 0.2-0.97, preferably 0.298-0.966.

The density of the core layer 3 is in the range of 0.2-0.78 $g/cm^3$.

The lightweight and reduced signal loss can be achieved through the cells in the foamed core layer 3.

In some embodiments, the core layer 3 is an extrusion foamed core layer and has a thickness of 0.5-10 mm and a density of 0.4-0.78 $g/cm^3$.

In some embodiments, the core layer 3 is a bead foamed core layer and has a thickness of 1-10 mm, preferably 3-10 mm, and a density of 0.2-0.78 $g/cm^3$.

The core layer 3 has a lower density resulting in weight reduction, has lower Dk and Df, and can provide good signal transmission performance and certain mechanical support.

Preferably, the multilayer polycarbonate composite sheet consists of two non-foamed skin layers 1, 2, two optional adhesive layers 4, 5, and one foamed core layer 3, having a total thickness in the range of 1.6-12.2 mm, the average density in the range of 0.524-0.967 $g/cm^3$, and the thickness ratio of the core layer 3 to the multilayer composite sheet in the range of 0.333-0.966.

Preferably, the multilayer composite sheet is symmetrical in structure, consists of two non-foamed skin layers 1, 2 and one extrusion foamed core layer 3, has a total thickness in the range of 1.6-9.9 mm, the average density thereof is in the range of 0.515-0.988 $g/cm^3$, and the thickness ratio of the core layer 3 to the total thickness is in a range of 0.298-0.965.

Preferably, the multilayer composite sheet is symmetrical in structure, consists of two non-foamed skin layers 1, 2 and one bead foamed core layer 3 , has a total thickness in the range of 1.6-10.35 mm, the average density thereof is in the range of 0.530-0.967 $g/cm^3$, and the thickness ratio of the core layer 3 to the total thickness is in a range of 0.333-0.957.

**Adhesive layers 4, 5**

The multilayer composite sheet according to the present invention may comprise a first adhesive layer 4 and /or a second adhesive layer 5 to bond the non-foamed skin layer(s) 4, 5 to the foamed core layer 3.

If present, the thickness of each of the adhesive layers 4, 5 is in a range from 0.025 to 0.1 mm.

The adhesive layers 4, 5 can be formed by any adhesive suitable for bonding polycarbonate layers.

For example, the first and second adhesive layers (4, 5), independently from each other, are formed by two-component cyanoacrylate/epoxy hybrid adhesive, two-component acrylic adhesive, two-component polyurethane adhesive, reactive polyurethane adhesive, or hot-melt thermoplastic polyurethane adhesive.

Examples of the commercially available two-component cyanoacrylate /epoxy hybrid adhesives include products with the trade name LOCTITE® HY 4090™ by Henkel (China) Co., Ltd.

Example of the commercially available two-component acrylic adhesives include products sold under the trade name LOCTITE® AA H3500™ and LOCTITE® AA H8000™ by Henkel (China) Co., Ltd.

Example of the commercially available two-component polyurethane adhesive include products sold under the trade name LOCTITE® HHD 6305 by Henkel (China) Co., Ltd.

Example of the commercially available reactive polyurethane adhesive films include products with the trade name Bayfol® LR-V 5902 from Covestro Polymers (China) Co., Ltd.

Examples of the commercially available hot-melt thermoplastic polyurethane (TPU) adhesive films include products sold under the trade name Platilon® HU2105 or Platilon® ID5051 from Covestro Polymers (China) Co., Ltd.

In some embodiments, the multilayer polycarbonate composite sheet is symmetrical in structure, consists of two non-foamed skin layers 1, 2, two adhesive layers 4, 5, and one bead foamed core 3, and has a total thickness in the range of 1.7-12.2 mm, the average density in the range of 0.548-0.930 $g/cm^3$, and the thickness ratio of the core layer 3 to the multilayer composite sheet in the range of 0.382-0.929.

**Preparation of multilayer composite sheet**

According to the second aspect of the present invention, provided is a method for preparing the multilayer composite sheet according to the present invention by co-extrusion, thermoforming, or adhesive bonding.

The skin layers 1, 2 and the core layer 3 can be available from the market or manufactured on-site with the first polycarbonate composition and the second polycarbonate composition, respectively.

If there is any optional component(s), the first polycarbonate composition and the second polycarbonate composition can be obtained by first mixing polycarbonate pellets with the optional component, and then melting and extruding the mixture obtained in a screw extruder.

The skin layers 1, 2 can be formed by injection molding, injection-compression molding, extrusion molding, blowing molding or thermoforming the first polycarbonate composition.

The skilled in the art can determine the processing parameters for injection molding, injection-compression molding, extrusion molding, blowing molding or thermoforming the first polycarbonate composition based on the materials used.

As mentioned previously, the core layer 3 can be extrusion foamed or bead foamed.

The core layer 3 can be formed by extrusion foaming or bead foaming the second polycarbonate composition.

The method for preparing extrusion foamed core layer can be physical foaming or chemical foaming.

In physical extrusion foaming, supercritical gas (generally $N_2$ or $CO_2$) is injected in a screw and mixed with the polymer melt during plasticization phase to form the single-phase solution. When the single phase solution is extruded through the extrusion die, the pressure decreases and the gas is released, causing the supercritical gas to produce cells that nucleate and grow continuously to form a foamed layer with internal cellular structure.

In chemical extrusion foaming, chemical foaming agent is premixed with the polymer pellets; then the mixture is fed into the hopper then conveyed in the screw for plasticization; the foaming agent is decomposed and released into gas by barrel heating and screw rotation shearing heat generated during plasticization, and evenly distributed in the melt. When the melt is extruded through the extrusion die, it immediately foams to form a foamed layer with internal cellular structure.

The chemical foaming agent can be any commonly used for polycarbonates in the art.

The method for preparing polycarbonate bead foamed core layer is as below:

A twin-extrusion line equipped with a co-rotating twin screw extruder combining with a single screw cooling extruder is used to produce the expandable PC beads. First, the physical foaming agent (eg., $CO_2$) is injected in the twin screw extruder in the dosing area during plasticization phase to form the single-phase solution; then the single phase melt-gas solution is conveyed to the single screw cooling extruder beneath the twin screw extruder and the single-phase solution is cooled down to a lower temperature and finally conveyed to the gear pump and then the die plate with multiple holes. After the melt leaves the die, it begins to expand and is subsequently separated into beads by rotating knifes, cooled down through circulating water. The final beads are dried and ejected by the underwater pelletizer.

A high-pressure steam-chest-molding machine was used to prepare the polycarbonate bead foaming sheet. First, the mold is preheated and closed with a certain gap between the parting surfaces. Secondly, the mold is filled with the weighed polycarbonate foaming beads through the feeding tunnel. Thirdly, the high pressure steam of 12-14 bar with steam temperature of 210-240 °C was introduced in the mold. Meanwhile, the mold is further closed till the parting surfaces completely fit in order to produce the sheet with the desired thickness. Finally, the mold is cooled down and opened to get a bead foaming sheet.

The desired weight reduction can be achieved by adjusting the foaming process parameters, the beads weighed in the steam-chest-molding process, and/or the steam chest molding process parameters.

In some embodiments, the multilayer composite sheet is prepared by co-extrusion.

In particular, in some embodiments, the method for preparing the multilayer composite sheet comprises co-extruding a melt of the first polycarbonate composition and a melt of the second polycarbonate composition melt into a die to form the multilayer composite sheet.

In some embodiments, the multilayer composite sheet is prepared by thermoforming.

In particular, in some embodiments, the method for preparing the multilayer composite sheet comprises the following steps:

i) providing the first non-foamed skin layer 1, optional first hot-melt adhesive layer 4, the foamed core layer 3, optional second hot-melt adhesive layer 5, and the second non-foamed skin layer 2; and
ii) stacking them in order, and
iii) laminating the stacked layers by thermoforming and cooling to obtain the multilayer composite sheet.

In some embodiments, the multilayer composite sheet is prepared by adhesive bonding.

In particular, in some embodiments, the method for preparing a multilayer composite sheet comprises:

i) providing the first non-foamed skin layer 1, the foamed core layer 3, and the second non-foamed skin layer 2; and
ii) applying a first adhesive on one surface of the first non-foamed skin layer 1 and a second adhesive on one surface of the second non-foamed skin layer 2 to form the first adhesive layer 4 and the second adhesive layer 5, respectively;
iii) stacking the first non-foamed skin layer 1, the foamed core layer 3, and the second non-foamed skin layer 2 in order with the first adhesive layer 4 and the second adhesive layer 5 facing one surface of the foamed core layer 3, respectively, and
iv) applying a load on the top of the stacked layers while curing the adhesive at room temperature (23 °C) to form the multilayer composite sheet.

The skilled in the art can select the parameters used in the process of preparation.

## Antenna housing comprising the multilayer composite sheet

According to a third aspect of the present invention, provided is an antenna housing comprising the multilayer composite sheet according to the present invention.

The multilayer composite article can be designed into desired 3-dimensional shape with appropriate size, so as to be used in many applications including antenna housings. When used as an antenna housing, the antenna housing may be provided with a shape of a rectangular parallelepiped, cube, semi-ellipsoid, semi-sphere, etc.

The non-foamed skin layers 1, 2 of the multilayer composite sheet according to the present invention can meet various appearance requirements, for example, matt, high gloss, different colors, and different decorative patterns can be realized on the skin layers 1, 2.

In addition, at least one of the non-foamed skin layers 1, 2 can provide waterproof, ultraviolet resistance, weather resistance, impact resistance, flame resistance and other properties according to the application needs. It can be used outdoors or indoors to meet relevant performance requirements.

Compared with the existing non-foamed polycarbonate sheet with the same thickness, the multilayer composite sheet of the present invention can achieve improved signal transmission performance and lightweight by a combination of a foamed core layer 3 and non-foamed skin layers 1, 2.

The signal loss during the transmission of electromagnetic waves in the medium is affected by many factors. For the housing as the transmission medium, in addition to the thickness and the distance from the housing to the antenna, the dielectric constant Dk and loss factor Df of the material are two particularly critical factors. Dk is a macro-physical quantity indicating the degree of polarization of a medium, and the capacity of the medium to store electric energy, thereby characterizing the ability to hinder signal transmission. Df is a physical quantity indicating the capability of the dielectric causing signal loss. The higher Dk, the higher Df, which indicates that the capability of the medium blocking signal transmission is stronger, and the more signal transmission loss is. For 5G signals, especially millimeter waves, Dk and Df of the antenna housing material need to be reduced to lower the signal loss. If the antenna housing has a two-layer or multilayer structure, S11 (return loss) and S21 (gain) are commonly used indicators to characterize the transmission performance of the antenna as mentioned previously, and its unit is dB.

Compared with the existing polycarbonate sheet with the same thickness, the multilayer composite sheet according to the present invention has relatively low return loss (S11) and gain loss (S21).

The antenna housing according to the present invention can be used as a protective housing for large outdoor antennas, small indoor antennas, and antennas of portable electrical and electronic equipment.

Particularly, the antenna housing according to the present invention can be used as a 5G antenna housing especially for 5G mmWave antenna housing.

The antenna housing according to the present invention can protect the 5G antenna from the sun, the rain and snow, the hail and wind after being installed outdoors.

At least one of the non-foamed skin layers 1,2 provides UV and/or impact resistance and prevents moisture from being absorbed into the foamed core layer 3. The presence of moisture may result in deterioration of mechanical and electrical performances of the antenna housing.

Compared with the conventional polycarbonate antenna housing, the antenna housing according to the present invention can reduce the signal loss of electromagnetic waves in the 5G band, especially at the mmWave frequencies and provide a weight reduction.

Examples

The concept, specific structure, and technical effects of the present invention will be further described with reference to examples, so that those skilled in the art can fully understand the objects, features, and effects of the present invention. Those skilled in the art can easily understand that the examples herein are only for illustrative purposes, and the scope of the invention is not limited thereto.

Equipments

Thermoforming machine: Dual unit press machine (Machine model: BL-6170-B) from Bolon precision testing machines Co., Ltd.

Raw materials

Solid polycarbonate sheet: made from Makrolon® 3107 from Covestro Polymers (China) Co. Ltd, with a thickness of 2.5 mm and the density of 1.2 g/cm$^3$.

Non-foamed extrusion polycarbonate films: Makrofol® DE1-1 from Covestro Polymers (China) Co., Ltd, with a thickness of 0.175 mm, 0.25 mm, 0.375 mm, 0.5 mm, 0.75 mm and 1 mm, respectively, and a density of 1.2 g/cm$^3$.

Polycarbonate extrusion foamed sheets: made from a base resin Makrolon® 3107 from Covestro Polymers (China) Co., Ltd. and a chemical foaming agent Hydrocerol® ITP833 from Clariant Chemical Group, one with a density of 0.49 g/cm$^3$ and a thickness of 2.05 mm, one with a density of 0.49 g/cm$^3$ and a thickness of 2.4 mm, one with a density of 0.4 g/cm$^3$ and the thickness of 2 mm, one with a density of 0.78 g/cm$^3$ and a thickness of 2 mm.

Polycarbonate bead foamed sheets: made with a base resin Makrolon® 3107 from Covestro Polymers (China) Co., Ltd, one with a thickness of 3 mm and a density of 0.50 g/cm$^3$, one with a thickness of 6 mm and a density of 0.2 g/cm$^3$, one with a thickness of 3 mm and a density of 0.78 g/cm$^3$.

Thermoplastic polyurethane (TPU) hot-melt adhesive film: Platilon® HU2105 from Covestro Polymers (China) Co., Ltd, with a thickness of 0.1 mm and a density of 1.16 g/cm$^3$.

Measurements

The impact performance of the multilayer composite sheet was tested according to ISO 6603-1:1985. In particular, the sample was placed on a supporting cylinder and was punched by a hammer which has a hemispherical strike tip with a diameter of 13mm, with a load of 500 g from the height of 1.3 m at room temperature (23 °C) based on the falling dart impact method. Then the surface of the punched sample is observed. If no breaking is observed, then 'No break' is recorded; if cracking happens then 'Cracking' is recorded; if the part has been punched through and breaking happens then 'Break' is recorded.

The average density of the multilayer composite sheet was calculated based on the following formula.

$$Average\ Density = \frac{total\ weight}{length \times width \times total\ thickness}$$

or

$$Average\ Density = \frac{t_1 \cdot \rho_1 + t_2 \cdot \rho_2 + \cdots + t_n \cdot \rho_n}{t_1 + t_2 + \cdots + t_n}$$

*Wherein,*

$t_1$, $t_2$, $t_n$ *represent thickness of the 1st layer, the 2nd layer, and the nth layer, respectively.*
$\rho_1$, $\rho_2$, $\rho_n$ *represent density of the 1st layer, the 2nd layer, and the nth layer, respectively.*

Dielectric constant Dk and loss factor Df were tested according to ASTM D150 with 16451B Dielectric Test Fixture from Keysight Technologies, wherein the Keysight resonant cavity method was used in the frequency range of 1.1 GHz-15.0 GHz, and the Keysight waveguide transmission line method was used in the frequency range of 18.0 GHz-50.0 GHz.

The measured Dk and Df for solid PC sheet, the PC film, TPU hot-melt adhesive film, the PC extrusion foamed sheets, and the PC bead foamed sheets were listed in Table 1. Dk and Df of the PC foamed sheet with the density of 0.12 g/cm³ is also showed in table 1.

Table 1 Dk/Df and density of solid PC, PC film, TPU film and PC foamed sheets

| Description | Density (g/cm³) | Dk | Df |
|---|---|---|---|
| Solid PC Sheet | 1.2 | 2.77 | 0.0058 |
| PC Film | 1.2 | 2.77 | 0.0058 |
| TPU Hotmelt Adhesive Film | 1.16 | 2.89 | 0.0367 |
| PC Extrusion Foamed Sheet | 0.49 | 1.45 | 0.0026 |
| PC Extrusion Foamed Sheet | 0.4 | 1.35 | 0.0021 |
| PC Extrusion Foamed Sheet | 0.78 | 1.79 | 0.0041 |
| PC Bead Foamed Sheet | 0.5 | 1.39 | 0.0026 |
| PC Bead Foamed Sheet | 0.2 | 1.14 | 0.0010 |
| PC Bead Foamed Sheet | 0.78 | 1.67 | 0.0041 |
| PC Foamed Sheet | 0.12 | 1.3 | 0.02 |

The simulation process was based on a version of CTS STUDIO SUITE 2014 (CST Microwave Studio) authorized by Southeast University. In the simulation process, the actual material characteristics are used, for example, copper was used for metal feed structure. The measured Dk and Df of PC film, PC extrusion foamed sheet, PC bead foamed sheet, the TPU hotmelt adhesive film and also the PC foamed sheet were used as the input data for the antenna housing, and the analog output data is reflection data and transmittance data, and corresponding S11 and S21. S11 is one of the S parameters, which indicates the return loss characteristics. This parameter indicates the transmission efficiency of the antenna. The higher the value, the greater the energy reflected by the antenna itself, and the worse the transmission efficiency of the antenna. S21 is the forward transmission coefficient (that is, the gain), the higher the value, the better the transmission efficiency of the antenna.

**Preparation of polycarbonate composite sheets**

In the following examples, the signal transmission performance of solid PC sheets, 2-layer polycarbonate composite sheets based on PC film and PC extrusion or bead foamed sheet, an asymmetrical 3-layer polycarbonate composite sheet based on PC film, TPU hotmelt adhesive film and PC bead foamed sheet, symmetrical 3-layer polycarbonate composite sheets based on PC films, extrusion or bead foamed sheet, symmetrical 5-layer polycarbonate composite sheets based on PC films, TPU hotmelt adhesive films and PC bead foamed sheet, as well as a symmetrical 3-layer polycarbonate composite sheet with a thickness of 6.16 mm based on PC film, PC foamed sheet and PC film were prepared and characterized.

Preparation of 2-layer polycarbonate composite sheets:

A 2-layer polycarbonate composite sheet can be obtained as follows:

a) Preheat the mold to 175 °C and maintain the temperature for at least 30 minutes;
b) Cut one piece of the non-foamed PC film with a desired thickness into a desired size;
c) Cut one piece of the PC extrusion (or bead) foamed sheet with a desired thickness into the same size as in step b;
d) Stack the materials in the order of PC film — PC extrusion (or bead) foamed sheet and place the stacked materials in the mold;
e) Close the mold and apply a pressure of 1 MPa for 1 minute;
f) Cool the mold down for 1 minute; and
g) Open the mold to obtain the 2-layer polycarbonate composite sheet.

Preparation of asymmetrical 3-layer polycarbonate composite sheets:

An asymmetrical 3-layer polycarbonate composite sheet can be obtained as follows:

a) Preheat the mold to 105 °C and maintain the temperature for at least 30 minutes;
b) Cut one piece of the non-foamed PC film with a desired thickness into a desired size;
c) Cut one piece of the TPU hotmelt adhesive film with a thickness of 0.1 mm and the same size as in step b;
d) Cut one piece of the PC bead foamed sheet with a desired thickness and the same size as in step b;
e) Stack the materials in the order of PC film- TPU hotmelt adhesive film-PC bead foamed sheet and place the stacked materials in the mold;
f) Close the mold and and apply a pressure of IMPa for 1 minute;
g) Cool the mold down for 1.5 minutes; and
h) Open the mold to obtain the asymmetrical 3-layer polycarbonate composite sheet.

Preparation of symmetrical 3-layer polycarbonate composite sheets:

A symmetrical 3-layer polycarbonate composite sheet can be obtained as follows:

a) Preheat the mold to 175 °C and maintain the temperature for at least 30 minutes;
b) Cut two pieces of the non-foamed PC film with a desired thickness into a desired size;
c) Cut one piece of the PC extrusion (or bead) foamed sheet with a desired thickness into the same size as in step b;
d) Stack the materials in the order of PC film — PC extrusion (or bead) foamed sheet — PC film and place the stacked materials in the mold;
e) Close the mold and apply a pressure of 1 MPa for 1 minute;
f) Cool the mold down for 1 minute; and
g) Open the mold to obtain the symmetrical 3-layer polycarbonate composite sheet.

Preparation of symmetrical 5-layer polycarbonate composite sheets:

A symmetrical 5-layer polycarbonate composite sheet can be obtained as follows:

a) Preheat the mold to 105 °C and maintain the temperature for at least 30 minutes;
b) Cut two pieces of the non-foamed PC film with a desired thickness into a desired size;
c) Cut two pieces of the TPU adhesive film with a thickness of 0.1 mm into the same size as in step b;
d) Cut one piece of the PC bead foamed sheet with a desired thickness with the same size as in step b;

e) Stack the materials in the order of PC film- TPU film-PC bead foamed sheet - TPU film -PC film and place the stacked materials in the mold;

f) Close the mold and and apply a pressure of IMPa for 1 minute;

g) Cool the mold down for 1.5 minutes; and

h) Open the mold to obtain the symmetrical 5-layer polycarbonate composite sheet.

### Comparative examples 1-4

In comparative examples (CE) 1-4, solid PC sheets with different thickness and the same density of 1.2 g/cm$^3$ were simulated at the selected 5G frequency of 28 GHz with 0 degree incident angle. Selected sheet thickness and corresponding signal transmission, reflection data, and S21 and S11 data were listed in Table 2.

Table 2

|  | Total thickness (mm) | Average density (g/cm$^3$) | Frequency (GHz) | Transmittance | S21 (dB) | Reflection | S11 (dB) |
|---|---|---|---|---|---|---|---|
| CE1 | 2.5 | 1.2 | 28 | 88.30% | -0.54 | 10.40% | -9.83 |
| CE2 | 3.95 | 1.2 | 28 | 87.08% | -0.60 | 10.56% | -9.77 |
| CE3 | 5.7 | 1.2 | 28 | 86.32% | -0.64 | 10.62% | -9.74 |
| CE4 | 7.2 | 1.2 | 28 | 84.86% | -0.71 | 11.02% | -9.58 |

It can be seen from Table 2 that the solid PC sheets of comparative examples 1-4 do not have good signal transmission performance at the selected 5G frequency of 28 GHz as demonstrated by signal transmittance <96% and S11>-20dB.

### Comparative examples 5 and 6

In comparative examples (CE) 5 and 6, 2-layer PC composite sheets with a non-foamed layer and an extrusion foamed layer were simulated at the selected 5G frequency of 28GHz with 0 degree incident angle. The 2-layer PC composite sheet of comparative example 5 comprises a non-foamed layer of 0.75 mm with the density of 1.2 g/cm$^3$ and an extrusion foamed layer of 1 mm with the density of 0.49 g/cm$^3$. The 2-layer PC composite sheet of comparative example 6 comprises a non-foamed layer of 1 mm with the density of 1.2 g/cm$^3$ and an extrusion foamed layer of 1 mm with the density of 0.49 g/cm$^3$. Corresponding signal transmission, reflection data, and S21 and S11 data were listed in Table 3.

Table 3

|  | Total thickness (mm) | Average density (g/cm$^3$) | Layer thickness (mm) L1/L2 | Frequency (GHz) | Transmittance | S21 (dB) | Reflection | S11 (dB) |
|---|---|---|---|---|---|---|---|---|
| CE5 | 1.75 | 0.794 | 0.75/1 | 28 | 86.17% | -0.65 | 13.21% | -8.79 |
| CE6 | 2 | 0.845 | 1/1 | 28 | 83.13% | -0.8 | 16.17% | -7.91 |

It can be seen from Table 3 that the 2-layer composite sheets of comparative examples 5 and 6 do not have good signal transmission performance at the selected 5G frequency of 28 GHz as demonstrated by signal transmittance <96% and S11>-20dB.

### Comparative example 7

In comparative example (CE) 7, a symmetrical PC 3-layer composite sheet with two non-foamed skin layers and one PC foamed core layer was simulated at the selected 5G frequencies of 24, 28, 35 and 40 GHz with 0 degree incident angle. The symmetrical 3-layer PC composite sheet of comparative example 7 comprises two non-foamed skin layer of 0.08 mm (with a density of 1.2 g/cm$^3$) and a foamed core layer of 6 mm (with a density of 0.12 g/cm$^3$, Dk of 1.3, and Df of 0.02). Corresponding signal transmission, reflection data, and S21 and S11 data were listed in Table 4.

Table 4

| | Total thickness (mm) | Average density (g/cm$^3$) | R* | Layer thickness (mm) L1/L2/L3 | Frequency (GHz) | Transmittance | S21 (dB) | Reflection | S11 (dB) |
|---|---|---|---|---|---|---|---|---|---|
| CE7 | 6.16 | 0.148 | 0.974 | 0.08/6/0.08 | 24 | 92.18% | -0.35 | 1.01% | -19.93 |
| | | | | | 28 | 90.24% | -0.45 | 2.00% | -16.99 |
| | | | | | 35 | 89.84% | -0.47 | 0.65% | -21.88 |
| | | | | | 40 | 88.88% | -0.51 | 0.13% | -28.81 |
| R*: the thickness ratio of the core layer to the multilayer composite sheet | | | | | | | | | |

It can be seen from Table 4 that the symmetrical 3-layer composite sheets of comparative example 7 do not have good signal transmission performance at the selected 5G frequencies of 24, 28, 35, and 40 GHz as demonstrated by signal transmittance <96% and/or S11>-20dB.

**Comparative examples 8-20 and invention examples 1-24**

In comparative examples (CE) 8-20 and invention examples (IE) 1-24, symmetrical 3-layer PC composite sheets with two non-foamed skin layers (with a density of 1.2 $g/cm^3$) and one extrusion foamed core layer (with a density of 0.49 $g/cm^3$) were simulated at the selected 5G frequencies of 28, 35 and 49 GHz with 0 degree incident angle. Selected sheet thickness and corresponding signal transmission, reflection data, and S21 and S11 data were listed in Table 5.

Table 5

| | Total thickness (mm) | Average density (g/cm$^3$) | R* | Layer Thickness (mm) L1/L2/L3 | Frequency (GHz) | Transmittance | S21 (dB) | Reflection | S11 (dB) |
|---|---|---|---|---|---|---|---|---|---|
| CE8 | 1.35 | 0.674 | 0.741 | 0.175/1/0.175 | 28 | 94.31% | -0.2543 | 5.24% | -12.80 |
| CE9 | 1.4 | 0.87 | 0.464 | 0.375/0.65/0.375 | 28 | 89.21% | -0.4957 | 10.18% | -9.92 |
| IE1 | 1.6 | 0.934 | 0.375 | 0.5/0.6/0.5 | 49 | 97.87% | -0.094 | 0.71% | -21.52 |
| IE2 | 1.7 | 0.908 | 0.412 | 0.5/0.7/0.5 | 49 | 98.45% | -0.068 | 0.0010% | -49.8 |
| IE3 | 1.7 | 0.803 | 0.559 | 0.375/0.95/0.375 | 49 | 98.66% | -0.059 | 0.00064% | -51.97 |
| IE4 | 1.75 | 0.693 | 0.714 | 0.25/1.25/0.25 | 49 | 98.89% | -0.0049 | 0.0030% | -45.16 |
| IE5 | 1.85 | 0.624 | 0.811 | 0.175/1.5/0.175 | 49 | 99.01% | -0.043 | 0.00089% | -50.51 |
| IE6 | 2.75 | 0.877 | 0.455 | 0.75/1.25/0.75 | 28 | 97.84% | -0.095 | 0.86% | -20.65 |
| IE7 | 2.85 | 0.988 | 0.298 | 1/0.85/1 | 28 | 97.85% | -0.094 | 0.61% | -22.14 |
| IE8 | 2.95 | 0.851 | 0.492 | 0.75/1.45/0.75 | 28 | 98.57% | -0.063 | 0.0060% | -42.19 |
| IE9 | 3 | 0.963 | 0.333 | 1/1/1 | 28 | 98.34% | -0.073 | 0.0016% | -48.10 |
| IE10 | 3.05 | 0.723 | 0.672 | 0.5/2.05/0.5 | 28 | 98.81% | -0.052 | 0.00260% | -45.85 |
| IE11 | 3.15 | 0.659 | 0.762 | 0.375/2.4/0.375 | 28 | 98.94% | -0.046 | 0.00032% | -54.97 |
| IE12 | 3.35 | 0.596 | 0.851 | 0.25/2.85/0.25 | 28 | 99.06% | -0.041 | 0.0012% | -49.23 |
| IE13 | 3.6 | 0.559 | 0.903 | 0.175/3.25/0.175 | 28 | 99.11% | -0.039 | 0.00063% | -51.98 |
| CE10 | 3.65 | 0.879 | 0.452 | 1/1.65/1 | 28 | 87.94% | -0.56 | 10.13% | -9.94 |
| CE11 | 3.8 | 0.770 | 0.605 | 0.75/2.3/0.75 | 28 | 88.05% | -0.55 | 10.25% | -9.89 |
| CE12 | 4.25 | 0.657 | 0.765 | 0.5/3.25/0.5 | 28 | 88.55% | -0.53 | 10.01% | -9.99 |
| CE13 | 4.9 | 0.599 | 0.847 | 0.375/4.15/0.375 | 28 | 88.54% | -0.53 | 10.14% | -9.94 |
| CE14 | 5.85 | 0.581 | 0.872 | 0.375/5.1/0.375 | 28 | 88.53% | -0.53 | 10.10% | -9.96 |
| CE15 | 6.25 | 0.604 | 0.840 | 0.5/5.25/0.5 | 28 | 88.27% | -0.54 | 10.21% | -9.91 |
| CE16 | 6.55 | 0.653 | 0.771 | 0.75/5.05/0.75 | 28 | 87.36% | -0.59 | 10.87% | -9.64 |
| CE17 | 6.75 | 0.700 | 0.704 | 1/4.75/1 | 28 | 86.77% | -0.62 | 11.23% | -9.49 |
| IE14 | 7.4 | 0.634 | 0.797 | 0.75/5.9/0.75 | 28 | 97.63% | -0.10 | 0.0073% | -41.37 |
| IE15 | 7.45 | 0.681 | 0.732 | 1/5.45/1 | 28 | 97.34% | -0.12 | 0.0049% | -43.10 |

(continued)

| | Total thickness (mm) | Average density (g/cm³) | R* | Layer Thickness (mm) L1/L2/L3 | Frequency (GHz) | Transmittance | S21 (dB) | Reflection | S11 (dB) |
|---|---|---|---|---|---|---|---|---|---|
| IE16 | 7.5 | 0.585 | 0.867 | 0.5/6.5/0.5 | 28 | 97.93% | -0.091 | 0.0039% | -44.03 |
| IE17 | 7.6 | 0.560 | 0.901 | 0.375/6.85/0.375 | 28 | 98.09% | -0.084 | 0.0010% | -49.85 |
| IE18 | 7.8 | 0.536 | 0.936 | 0.25/7.3/0.25 | 28 | 98.23% | -0.078 | 0.0014% | -48.40 |
| IE19 | 8.05 | 0.521 | 0.957 | 0.175/7.7/0.175 | 28 | 98.28% | -0.075 | 0.0010% | -49.97 |
| CE18 | 8.25 | 0.619 | 0.818 | 0.75/6.75/0.75 | 28 | 87.28% | -0.59 | 10.18% | -9.92 |
| CE19 | 8.75 | 0.571 | 0.886 | 0.5/7.75/0.5 | 28 | 87.30% | -0.59 | 10.48% | -9.79 |
| CE20 | 9.35 | 0.547 | 0.920 | 0.375/8.6/0.375 | 28 | 87.85% | -0.56 | 10.07% | -9.97 |
| IE20 | 9.5 | 0.602 | 0.842 | 0.75/8/0.75 | 35 | 96.44% | -0.158 | 0.0095% | -40.22 |
| IE21 | 9.5 | 0.565 | 0.895 | 0.5/8.5/0.5 | 35 | 96.89% | -0.137 | 0.0048% | -43.17 |
| IE22 | 9.55 | 0.546 | 0.921 | 0.375/8.8/0.375 | 35 | 97.12% | -0.127 | 0.0050% | -43.01 |
| IE23 | 9.7 | 0.527 | 0.948 | 0.25/9.2/0.25 | 35 | 97.33% | -0.118 | 0.0022% | -46.65 |
| IE24 | 9.9 | 0.515 | 0.965 | 0.175/9.55/0.175 | 35 | 97.42% | -0.114 | 0.0038% | -44.17 |

R*: the thickness ratio of the core layer to the multilayer composite sheet

It can be seen from Table 5 that the symmetrical 3-layer composite sheets of invention examples 1-24 have good signal transmission performance at the selected 5G frequencies of 28, 35 and 49 GHz as demonstrated by signal transmittance >96% and S11<-20dB.

It can also be seen that the symmetrical 3-layer composite sheets of comparative examples 8-20 do not have good signal transmission performance at the selected 5G frequency of 28 GHz as demonstrated by signal transmittance <96% and/or S11>-20dB.

### Comparative examples 21 and 22

In comparative examples (CE) 21 and 22, 2-layer PC composite sheets with a non-foamed layer and a bead foamed layer were simulated at the selected 5G frequency of 28GHz with 0 degree incident angle. The 2-layer PC composite sheet of comparative example 21 comprises a non-foamed layer of 0.75 mm with the density of 1.2 g/cm$^3$, and a bead foamed layer of 1 mm with the density of 0.5 g/cm$^3$. The 2-layer PC composite sheet of comparative example 22 comprises a non-foamed layer of 1 mm with the density of 1.2 g/cm$^3$ and a bead foamed layer of 1 mm with the density of 0.5 g/cm$^3$. Selected sheet thickness and corresponding signal transmission, reflection data, and S21 and S11 data were listed in Table 6.

Table 6

| | Total thickness (mm) | Average density (g/cm$^3$) | Layer Thickness (mm) L1/L2 | Frequency (GHz) | Transmittance | S21 (dB) | Reflection | S11 (dB) |
|---|---|---|---|---|---|---|---|---|
| CE21 | 1.75 | 0.8 | 0.75/1 | 28 | 86.66% | -0.62 | 12.7% | -8.96 |
| CE22 | 2 | 0.85 | 1/1 | 28 | 83.2% | -0.8 | 16.09% | -7.94 |

It can be seen from Table 6 that the 2-layer composite sheets of comparative example 21 and 22 do not have good signal transmission performance at the commonly used 5G frequency of 28 GHz as demonstrated by signal transmittance <96% and S11>-20dB.

### Comparative examples 23-38 and invention examples 25-44

In comparative examples (CE) 23-38 and invention examples (IE) 25-44, symmetrical 3-layer PC composite sheets with two non-foamed skin layers with a density of 1.2 g/cm$^3$ and one bead foamed core layer with a density of 0.5 g/cm$^3$ were simulated at the selected 5G frequencies of 28, 35 and 49 GHz with 0 degree incident angle. Selected sheet thickness and corresponding signal transmission, reflection data, and S21 and S11 data were listed in Table 7.

Table 7

| | Total thickness (mm) | Average density (g/cm³) | R* | Layer Thickness (mm) L1/L2/L3 | Frequency (GHz) | Transmittance | S21 (dB) | Reflection | S11 (dB) |
|---|---|---|---|---|---|---|---|---|---|
| CE23 | 1.35 | 0.681 | 0.741 | 0.175/1/0.175 | 28 | 94.88% | -0.228 | 4.67% | -13.30 |
| CE24 | 1.5 | 0.733 | 0.667 | 0.25/1/0.25 | 28 | 93.38% | -0.2977 | 6.10% | -12.15 |
| IE25 | 1.6 | 0.653 | 0.781 | 0.175/1.25/0.175 | 49 | 98.44% | -0.068 | 0.71% | -21.48 |
| IE26 | 1.75 | 0.7 | 0.714 | 0.25/1.25/0.25 | 49 | 98.89% | -0.049 | 0.0023% | -46.43 |
| IE27 | 1.85 | 0.632 | 0.811 | 0.175/1.5/0.175 | 49 | 99.02% | -0.043 | 0.0046% | -43.39 |
| IE28 | 2.7 | 0.759 | 0.630 | 0.5/1.7/0.5 | 28 | 98.10% | -0.083 | 0.86% | -20.66 |
| IE29 | 2.95 | 0.856 | 0.492 | 0.75/1.45/0.75 | 28 | 98.57% | -0.062 | 0.00073% | -51.39 |
| IE30 | 3 | 0.733 | 0.667 | 0.5/2/0.5 | 28 | 98.83% | -0.051 | 0.00049% | -53.07 |
| IE31 | 3 | 0.967 | 0.333 | 1/1/1 | 28 | 98.33% | -0.073 | 0.0067% | -41.77 |
| IE32 | 3.1 | 0.669 | 0.758 | 0.375/2.35/0.375 | 28 | 98.96% | -0.045 | 0.00051% | -52.93 |
| IE33 | 3.3 | 0.606 | 0.848 | 0.25/2.8/0.25 | 28 | 99.08% | -0.040 | 0.0017% | -47.69 |
| IE34 | 3.55 | 0.569 | 0.901 | 0.175/3.2/0.175 | 28 | 99.13% | -0.038 | 0.00008% | -61.07 |
| CE25 | 3.65 | 0.884 | 0.452 | 1/1.65/1 | 28 | 87.53% | -0.58 | 10.53% | -9.77 |
| CE26 | 3.8 | 0.776 | 0.605 | 0.75/2.3/0.75 | 28 | 87.65% | -0.57 | 10.64% | -9.73 |
| CE27 | 4.25 | 0.665 | 0.765 | 0.5/3.25/0.5 | 28 | 88.36% | -0.54 | 10.21% | -9.91 |
| CE28 | 4.9 | 0.607 | 0.847 | 0.375/4.15/0.375 | 28 | 88.64% | -0.52 | 10.05% | -9.98 |
| CE29 | 5.6 | 0.563 | 0.911 | 0.25/5.1/0.25 | 28 | 92.10% | -0.36 | 6.64% | -11.78 |
| CE30 | 5.8 | 0.542 | 0.940 | 0.175/5.45/0.175 | 28 | 94.13% | -0.26 | 4.65% | -13.33 |
| CE31 | 5.85 | 0.590 | 0.872 | 0.375/5.1/0.375 | 28 | 88.56% | -0.53 | 10.08% | -9.97 |
| CE32 | 6.3 | 0.611 | 0.841 | 0.5/5.3/0.5 | 28 | 88.26% | -0.54 | 10.23% | -9.90 |
| CE33 | 6.65 | 0.658 | 0.774 | 0.75/5.15/0.75 | 28 | 87.75% | -0.57 | 10.47% | -9.80 |
| CE34 | 6.85 | 0.704 | 0.708 | 1/4.85/1 | 28 | 87.03% | -0.60 | 10.96% | -9.60 |
| IE35 | 7.25 | 0.597 | 0.862 | 0.5/6.25/0.5 | 28 | 97.26% | -0.12 | 0.82% | -20.86 |
| IE36 | 7.5 | 0.640 | 0.800 | 0.75/6/0.75 | 28 | 97.62% | -0.10 | 0.0037% | -44.37 |
| IE37 | 7.55 | 0.593 | 0.868 | 0.5/6.55/0.5 | 28 | 97.95% | -0.090 | 0.0013% | -48.81 |

(continued)

| | Total thickness (mm) | Average density (g/cm³) | R* | Layer Thickness (mm) L1/L2/L3 | Frequency (GHz) | Transmittance | S21 (dB) | Reflection | S11 (dB) |
|---|---|---|---|---|---|---|---|---|---|
| IE38 | 7.55 | 0.685 | 0.735 | 1/5.55/1 | 28 | 97.31% | -0.12 | 0.0160% | -38.36 |
| IE39 | 7.65 | 0.569 | 0.902 | 0.375/6.9/0.375 | 28 | 98.11% | -0.083 | 0.0008% | -50.98 |
| IE40 | 7.85 | 0.545 | 0.936 | 0.25/7.35/0.25 | 28 | 98.25% | -0.077 | 0.0013% | -49.00 |
| IE41 | 8.1 | 0.530 | 0.957 | 0.175/7.75/0.175 | 28 | 98.31% | -0.074 | 0.00044% | -53.57 |
| CE35 | 8.2 | 0.671 | 0.756 | 1/6.2/1 | 28 | 86.57% | -0.63 | 10.60% | -9.75 |
| CE36 | 8.35 | 0.626 | 0.820 | 0.75/6.85/0.75 | 28 | 86.79% | -0.62 | 10.67% | -9.72 |
| CE37 | 8.8 | 0.580 | 0.886 | 0.5/7.8/0.5 | 28 | 87.59% | -0.58 | 10.20% | -9.92 |
| CE38 | 9.5 | 0.555 | 0.921 | 0.375/8.75/0.375 | 28 | 87.73% | -0.57 | 10.20% | -9.92 |
| IE42 | 9.85 | 0.536 | 0.949 | 0.25/9.35/0.25 | 35 | 97.33% | -0.12 | 0.0053% | -42.76 |
| IE43 | 10 | 0.525 | 0.965 | 0.175/9.65/0.175 | 35 | 97.45% | -0.11 | 0.0010% | -49.80 |
| IE44 | 10.35 | 0.524 | 0.966 | 0.175/10/0.175 | 35 | 96.81% | -0.14 | 0.55% | -22.60 |

R*: the thickness ratio of the core layer to the multilayer composite sheet

It can be seen from Table 7 that the symmetrical 3-layer composite sheets of invention examples 25-44 have good signal transmission performance at the selected 5G frequencies of 28, 35 and 49 GHz as demonstrated by signal transmittance >96% and S11<-20dB.

It can also be seen that the symmetrical 3-layer composite sheets of comparative examples 23-38 do not have good signal transmission performance at the selected 5G frequency of 28 GHz as demonstrated by signal transmittance <96% and/or S11>-20dB.

### Comparative examples 39 and 40

In comparative examples (CE) 39 and 40, asymmetrical 3-layer PC composite sheets with one non-foamed skin layer (with a density of 1.2 g/cm$^3$), one adhesive layer (with a density of 1.16 g/cm$^3$) and one bead foamed layer (with a density of 0.5 g/cm$^3$) were simulated at the selected 5G frequency of 28 GHz with 0 degree incident angle. Selected sheet thickness and corresponding signal transmission, reflection data, and S21 and S11 data were listed in Table 8.

Table 8

| | Total thickness (mm) | Average density (g/cm$^3$) | R* | Layer Thickness (mm) L1/L2/L3 | Frequency (GHz) | Transmittance | S21 (dB) | Reflection | S11 (dB) |
|---|---|---|---|---|---|---|---|---|---|
| CE39 | 1.85 | 0.819 | 0.541 | 0.75/0.1/1 | 28 | 84.67% | -0.72 | 14.27% | -8.46 |
| CE40 | 2.1 | 0.865 | 0.476 | 1/0.1/1/ | 28 | 81.83% | -0.87 | 17.05% | -7.68 |
| R*: the thickness ratio of the core layer to the multilayer composite sheet | | | | | | | | | |

It can be seen from Table 8 that the asymmetrical 3-layer composite sheets of comparative examples 39 and 40 do not have good signal transmission performance at the selected 5G frequency of 28 GHz as demonstrated by signal transmittance <96% and/or S11>-20dB.

**Comparative examples 41-51 and invention examples 45-64**

In comparative examples (CE) 41-51 and invention examples (IE) 45-64, symmetrical 5-layer PC composite sheets with two non-foamed skin layers (with a density of 1.2 g/cm$^3$), two adhesive layers (with a density of 1.16 g/cm$^3$) and one bead foamed core layer (with a density of 0.5 g/cm$^3$) were simulated at the selected 5G frequencies of 28 or 49 GHz with 0 degree incident angle. Selected sheet thickness and corresponding signal transmission, reflection data, and S21 and S11 data were listed in Table 9.

Table 9

| | Total thickness (mm) | Average density (g/cm³) | R* | Layer thickness (mm) L1/L2/L3/L4/L5 | Frequency (GHz) | Transmittance | S21 (dB) | Reflection | S11 (dB) |
|---|---|---|---|---|---|---|---|---|---|
| CE41 | 1.55 | 0.743 | 0.645 | 0.175/0.1/1/0.1/0.175 | 28 | 92.04% | -0.36 | 6.63% | -11.79 |
| IE45 | 1.7 | 0.585 | 0.676 | 0.175/0.1/1.15/0.1/0.175 | 49 | 97.23% | -0.122 | 0.0087% | -40.60 |
| IE46 | 1.7 | 0.647 | 0.588 | 0.25/0.1/1/0.1/0.25 | 49 | 97.16% | -0.125 | 0.0072% | -41.45 |
| IE47 | 1.8 | 0.639 | 0.611 | 0.25/0.1/1.1/0.1/0.25 | 49 | 96.49% | -0.155 | 0.51% | -22.89 |
| IE48 | 1.9 | 0.576 | 0.711 | 0.175/0.1/1.35/0.1/0.175 | 49 | 96.03% | -0.176 | 0.94% | -20.26 |
| IE49 | 2.7 | 0.679 | 0.741 | 0.25/0.1/2/0.1/0.25 | 28 | 97.27% | -0.12 | 0.97% | -20.14 |
| IE50 | 2.75 | 0.930 | 0.382 | 0.75/0.1/1.05/0.1/0.75 | 28 | 97.02% | -0.13 | 0.96% | -20.16 |
| IE51 | 2.95 | 0.782 | 0.593 | 0.5/0.1/1.75/0.1/0.5 | 28 | 97.87% | -0.09 | 0.00% | -45.60 |
| IE52 | 2.95 | 0.901 | 0.424 | 0.75/0.1/1.25/0.1/0.75 | 28 | 97.78% | -0.10 | 0.00% | -47.24 |
| IE53 | 3 | 0.719 | 0.683 | 0.375/0.1/2.05/0.1/0.375 | 28 | 97.94% | -0.09 | 0.00% | -46.28 |
| IE54 | 3.15 | 0.653 | 0.778 | 0.25/0.1/2.45/0.1/0.25 | 28 | 97.99% | -0.09 | 0.0047% | -43.24 |
| IE55 | 3.25 | 0.616 | 0.831 | 0.175/0.1/2.7/0.1/0.175 | 28 | 98.05% | -0.09 | 0.0017% | -47.75 |
| CE42 | 3.65 | 0.920 | 0.397 | 1/0.1/1.45/0.1/1 | 28 | 86.35% | -0.64 | 10.91% | -9.62 |
| CE43 | 4 | 0.708 | 0.700 | 0.5/0.1/2.8/0.1/0.5 | 28 | 86.96% | -0.61 | 10.49% | -9.79 |
| CE44 | 5.15 | 0.594 | 0.864 | 0.25/0.1/4.45/0.1/0.25 | 28 | 87.74% | -0.57 | 10.10% | -9.96 |
| CE45 | 6.25 | 0.605 | 0.848 | 0.375/0.1/5.3/0.1/0.375 | 28 | 87.56% | -0.58 | 10.27% | -9.88 |
| CE46 | 6.95 | 0.720 | 0.683 | 1/0.1/4.75/0.1/1 | 28 | 87.12% | -0.60 | 10.32% | -9.86 |
| IE56 | 7.5 | 0.611 | 0.840 | 0.5/0.1/6.3/0.1/0.5 | 28 | 96.97% | -0.13 | 0.00% | -45.09 |
| IE57 | 7.5 | 0.658 | 0.773 | 0.75/0.1/5.8/0.1/0.75 | 28 | 96.80% | -0.14 | 0.00% | -44.85 |
| IE58 | 7.55 | 0.587 | 0.874 | 0.375/0.1/6.6/0.1/0.375 | 28 | 97.07% | -0.13 | 0.00% | -45.51 |
| IE59 | 7.55 | 0.703 | 0.709 | 1/0.1/5.35/0.1/1 | 28 | 96.69% | -0.15 | 0.01% | -41.00 |
| IE60 | 7.65 | 0.563 | 0.908 | 0.25/0.1/6.95/0.1/0.25 | 28 | 97.17% | -0.12 | 0.00% | -43.48 |
| IE61 | 7.8 | 0.548 | 0.929 | 0.175/0.1/7.25/0.1/0.175 | 28 | 97.22% | -0.12 | 0.0031% | -45.08 |
| CE47 | 8.2 | 0.687 | 0.732 | 1/0.1/6/0.1/1 | 28 | 85.36% | -0.69 | 10.99% | -9.59 |

EP 4 140 728 A1

(continued)

| | Total thickness (mm) | Average density (g/cm³) | R* | Layer thickness (mm) L1/L2/L3/L4/L5 | Frequency (GHz) | Transmittance | S21 (dB) | Reflection | S11 (dB) |
|---|---|---|---|---|---|---|---|---|---|
| CE48 | 8.85 | 0.574 | 0.893 | 0.375/0.1/7.9/0.1/0.375 | 28 | 86.78% | -0.62 | 10.05% | -9.98 |
| CE49 | 9.7 | 0.550 | 0.928 | 0.25/0.1/9/0.1/0.25 | 28 | 87.05% | -0.60 | 10.03% | -9.99 |
| CE50 | 11.5 | 0.633 | 0.809 | 1/0.1/9.3/0.1/1 | 28 | 86.45% | -0.63 | 10.06% | -9.98 |
| IE62 | 11.95 | 0.628 | 0.816 | 1/0.1/9.75/0.1/1 | 28 | 95.09% | -0.22 | 0.78% | -21.10 |
| IE63 | 12.1 | 0.627 | 0.818 | 1/0.1/9.9/0.1/1 | 28 | 95.67% | -0.19 | 0.01% | -40.04 |
| IE64 | 12.2 | 0.626 | 0.820 | 1/0.1/10/0.1/1 | 28 | 95.29% | -0.21 | 0.30% | -25.26 |
| CE51 | 12.75 | 0.620 | 0.827 | 1/0.1/10.55/0.1/1 | 28 | 84.40% | -0.74 | 11.06% | -9.56 |

R*: the thickness ratio of the core layer to the multilayer composite sheet

It can be seen from Table 9 that the symmetrical 5-layer composite sheets of invention examples 45-64 have good signal transmission performance at the selected 5G frequencies of 28 or 49 GHz as demonstrated by signal transmittance >96% and S11<-20dB.

It can also be seen that the symmetrical 5-layer composite sheets of comparative examples 41-51 do not have good signal transmission performance at the selected 5G frequency of 28 GHz as demonstrated by signal transmittance <96% and/or S11>-20dB.

**Characterization of mechanical propert**y

The falling dart impact test was conducted at room temperature (23 °C) on a solid polycarbonate sheet of comparative example 1, symmetrical 3-layer composite sheets with PC extrusion foamed core layer of invention examples 10 and 11, symmetrical 3-layer composite sheets with PC bead foamed core layer of invention example 33 and 34, a symmetrical 5-layer composite sheet with PC bead foamed core layer of invention example 55, and a polycarbonate extrusion foamed sheet and a polycarbonate bead foamed sheet and the results were listed in Table 10.

Table 10

| | Description | Total thickness (mm) | Average density (g/cm$^3$) | Layer thickness (mm) L1/L2/L3/L4/L5 | R* | Falling dart impact test |
|---|---|---|---|---|---|---|
| CE1 | Solid PC sheet | 2.5 | 1.2 | / | / | No break |
| | PC extrusion foamed sheet | 3 | 0.49 | / | / | Crack |
| | PC bead foamed sheet | 3 | 0.5 | / | / | Crack |
| IE10 | Symmetrical 3-layer with PC extrusion foamed core layer | 3.05 | 0.723 | 0.5/2.05/0.5 | 0.672 | No break |
| IE11 | Symmetrical 3-layer with PC extrusion foamed core layer | 3.15 | 0.659 | 0.375/2.4/0.375 | 0.762 | No break |
| IE33 | Symmetrical 3-layer with PC bead foamed core layer | 3.3 | 0.606 | 0.25/2.8/0.25 | 0.848 | No break |
| IE34 | Symmetrical 3-layer with PC bead foamed core layer | 3.55 | 0.569 | 0.175/3.2/0.175 | 0.901 | No break |
| IE55 | Symmetrical 5-layer with PC bead foamed core layer | 3.25 | 0.616 | 0.175/0.1/2.7/0.1/0.175 | 0.831 | No break |
| R/*: the thickness ratio of the core layer to the multilayer composite sheet | | | | | | |

It can be seen that multilayer composite sheets according to the present invention can pass the falling dart impact test with a height of 1.3 m and a load of 500 g at room temperature (23 °C), while the polycarbonate extrusion foamed sheet and the polycarbonate bead foamed sheet failed the test.

**Claims**

1. A multilayer composite sheet for an antenna housing, comprising, in order:

   a first non-foamed skin layer (1);
   an optional first adhesive layer (4);
   a foamed core layer (3);
   an optional second adhesive layer (5); and
   a second non-foamed skin layer (2);
   wherein,

the first and second non-foamed skin layers (1, 2) are made from a first polycarbonate composition comprising polycarbonate and an optional component selected from impact modifiers, flame retardants, UV absorbers, and fillers,

the core layer (3) is made from a second polycarbonate composition comprising polycarbonate and an optional component selected from impact modifiers and flame retardants,

each of the first and second skin layer (1, 2) has a thickness in a range of 0.1-1.0 mm, the core layer (3) has a thickness in a range of 0.5-10 mm, the total thickness of the multi-layer polycarbonate composite sheet is in a range of 1.6-12.2 mm, the thickness ratio of the core layer (3) to the multilayer composite sheet is in a range of 0.2-0.97,

the density of the core layer (3) is in the range of 0.2-0.78 $g/cm^3$, the average density of the multilayer composite sheet is in the range of 0.5-1.1 $g/cm^3$,

the multilayer composite sheet has signal transmittance of more than 96% and S11 of less than -20 dB.

2. The multilayer composite sheet according to claim 1, wherein the thickness ratio of the core layer (3) to the multilayer composite sheet is in a range of 0.298-0.966.

3. The multilayer composite sheet according to claim 1 or 2, wherein the core layer (3) is an extrusion foamed core layer and has a thickness of 0.5-10 mm and a density of 0.4-0.78 $g/cm^3$.

4. The multilayer composite sheet according to claim 1 or 2, wherein the core layer (3) is a bead foamed core layer and has a thickness of 1-10 mm, preferably 3-10 mm, and a density of 0.2-0.78 $g/cm^3$.

5. The multilayer composite sheet according to claim 1, wherein the multilayer polycarbonate composite sheet consists of two non-foamed skin layers (1, 2), two optional adhesive layers (4, 5), and one foamed core layer (3), having a total thickness in the range of 1.6-12.2 mm, the average density in the range of 0.524-0.967 $g/cm^3$, and the thickness ratio of the core layer (3) to the multilayer composite sheet in the range of 0.333-0.966.

6. The multilayer composite sheet according to any of claims 1-5, wherein the first and second adhesive layers (4, 5), independently from each other, are formed by two-component cyanoacrylate/epoxy hybrid adhesive, two-component acrylic adhesive, two-component polyurethane adhesive, reactive polyurethane adhesive, or hot-melt thermoplastic polyurethane adhesive.

7. The multilayer composite sheet according to claim 1, wherein the multilayer composite sheet consists of two non-foamed skin layers (1, 2) and one extrusion foamed core layer (3), having a total thickness in the range of 1.6-9.9 mm, the average density thereof is in the range of 0.515-0.988 $g/cm^3$, and the thickness ratio of the core layer (3) to the total thickness is in a range of 0.298-0.965.

8. The multilayer composite sheet according to claim 1, wherein the multilayer composite sheet consists of two non-foamed skin layers (1, 2) and one bead foamed core layer (3), having a total thickness in the range of 1.6-10.35 mm, the average density thereof is in the range of 0.530-0.967 $g/cm^3$, and the thickness ratio of the core layer (3) to the total thickness is in a range of 0.333-0.957.

9. The multilayer composite sheet according to claim 1, wherein the multilayer polycarbonate composite sheet is symmetrical in structure, consists of two non-foamed skin layers (1, 2), two adhesive layers (4, 5), and one bead foamed core (3), having a total thickness in the range of 1.7-12.2 mm, the average density in the range of 0.548-0.930 $g/cm^3$, and the thickness ratio of the core layer (3) to the multilayer composite sheet in the range of 0.382-0.929.

10. The multilayer composite sheet according to any of claims 1-9, wherein the multilayer composite sheet has a S11 of less than -30 dB, preferably less than -40dB.

11. A method for preparing the polycarbonate composite article according to any of claims 1 to 10 by co-extrusion, thermoforming, or adhesive bonding.

12. Use of the polycarbonate composite article according to any of claims 1 to 10 as an antenna housing.

13. An antenna housing comprising the multilayer composite sheet according to any of claims 1 to 10.

(a)

(b)

Fig.1

(a)

(b)

Fig.2

(a)

(b)

Fig. 3

Europäisches
Patentamt

European
Patent Office

Office européen
des brevets

## EUROPEAN SEARCH REPORT

Application Number

**EP 21 19 3298**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CN 111 421 937 A (SHANGHAI ALLIED IND CO LTD) 17 July 2020 (2020-07-17) | 1,11-13 | INV. B32B5/18 |
| A | * claims 1-4 * | 2-10 | B32B7/12 B32B27/08 |
| A,D | US 6 492 015 B1 (AOKI TAKESHI [JP] ET AL) 10 December 2002 (2002-12-10) * claim 1 * | 1 | B32B27/18 B32B27/20 B32B27/36 H01Q1/00 |
| A | WO 2020/205923 A1 (LAIRD TECHNOLOGIES INC [US]) 8 October 2020 (2020-10-08) * claim 1 * | 1 | |

TECHNICAL FIELDS
SEARCHED     (IPC)

B32B
H01Q

The present search report has been drawn up for all claims

| Place of search | Date of completion of the search | Examiner |
|---|---|---|
| The Hague | 3 February 2022 | Hillebrand, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 3298

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2022

| Patent document cited in search report | | Publication date | Patent family member(s) | | Publication date |
|---|---|---|---|---|---|
| CN 111421937 | A | 17-07-2020 | NONE | | |
| US 6492015 | B1 | 10-12-2002 | AT | 365103 T | 15-07-2007 |
| | | | DE | 60035245 T2 | 21-02-2008 |
| | | | EP | 1090744 A2 | 11-04-2001 |
| | | | JP | 4446412 B2 | 07-04-2010 |
| | | | JP | 2001105557 A | 17-04-2001 |
| | | | US | 6492015 B1 | 10-12-2002 |
| WO 2020205923 | A1 | 08-10-2020 | CN | 111786102 A | 16-10-2020 |
| | | | CN | 113906631 A | 07-01-2022 |
| | | | CN | 210182571 U | 24-03-2020 |
| | | | EP | 3949014 A1 | 09-02-2022 |
| | | | KR | 20210129260 A | 27-10-2021 |
| | | | TW | M607013 U | 01-02-2021 |
| | | | TW | 202103373 A | 16-01-2021 |
| | | | US | 2022029282 A1 | 27-01-2022 |
| | | | WO | 2020205923 A1 | 08-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6492015 B1
- CN 111421937 A
- EP 1308084 A1
- DE 102007011069 A1
- DE 10311063 A1

**Non-patent literature cited in the description**

- **W. SCHOLTAN ; H. LANGE ; KOLLOID, Z. UND Z.** *Polymere,* 1972, vol. 250, 782-1796